# EUROPEAN PATENT SPECIFICATION

(11) **EP 3 043 959 B1**
(45) Date of publication and mention of the grant of the patent: **05.05.2021**
(21) Application number: 14766975.8
(22) Date of filing: 15.09.2014
(51) Int. Cl.: B24B 45/00, B23Q 3/12

(54) **FAST MOUNTABLE TOOL**
WERKZEUG FÜR SCHNELLE MONTAGE
OUTIL À MONTAGE RAPIDE

(30) Priority: 15.09.2013 BE 201300607
(43) Date of publication of application: 20.07.2016
(73) Proprietor: Thijs, Marc, 3012 Wilsele (BE)
(72) Inventor: Thijs, Marc, 3012 Wilsele (BE)
(74) Representative: DenK iP bv
(86) International application number: PCT/EP2014/069640
(87) International publication number: WO 2015/036600

(56) References cited:
- WO-A1-2005/016594
- WO-A1-2012/101622
- US-A- 1 975 877
- US-A- 2 092 060
- US-A1- 2011 194 907

## Description

### Field of the Invention

The present invention generally relates to an adaptor and a mounting system with such an adaptor which provide a fast, efficient way to mount or dismount a tool having a cylindrical cavity to/from a drive shaft. More specifically, the present invention relates to an adaptor and a mounting system with such an adaptor which provide an efficient and accurate way to connect a tool having a cylindrical cavity to a drive shaft without the need for additional mechanical aids. These tools with a cylindrical shaped cavity are for example suitable for sanding or grinding or polishing.

### Background of the Invention

The present invention is mainly situated in the metal industry, more specifically in the stainless steel industry. The invention is related to hand-held or portable machines whereupon a tool with a cylindrical cavity can be mounted. In particular applications, this tool with a cylindrical cavity is a sanding wheel or a grinding wheel, further herein indicated as "sanding/grinding wheel". One speaks of sanding wheels or grinding wheels, also called polishing wheels or finishing wheels, although other names may also be used for this type of wheels. The driving of the wheels is typically performed by driving a drive shaft in a portable polishing machine. This polishing machine has a spindle blocking mechanism or a spindle lock.

The invention is mainly aimed at fitting the sanding/grinding wheels on their drive shaft. In the prior art, various types of drive methods for sanding or grinding wheels are known.

In a first prior art method, the drive shaft contains one, two, or four keyways (also known as key-grooves or key-seatings). An adapter with abrasive (e.g. sanding or grinding) material is slid over this shaft and is secured to the drive shaft by means of a bolt and a washer. This type of mounting implies that there is a protruding element which projects beyond the sanding/grinding wheel, i.e. the fixing bolt extends beyond the sanding/grinding wheel. This projecting part will typically have a disturbing effect in certain applications, especially when one has to sand or grind along 90° upright sides in the longitudinal direction. This requires full attention of the operator in order not to cause damage to these upright sides. If the co-rotating fixing bolt contacts the stainless steel during the sanding or grinding operation, this can lead to damage of the stainless steel.

An additional drawback of this attachment method is the relatively high changeover time for replacing the sanding/grinding wheels. In particular, each time one has to loosen and remove the fixing bolt, dismount the sanding/grinding wheel, mount another type of sanding/grinding wheel, and then mount and tighten the fixing bolt to secure the sanding/grinding wheel.

With this attachment method, the drive shaft diameter and the inner diameter of the adapter may be different. This is dependent on the manufacturer of the shaft and the manufacturer of the adapter. Often they are not matched as regards the exact diameters. This causes an imbalance and vibration of the sanding/grinding wheel, and results in a cloud-like appearance on the stainless steel. This cloud-like appearance can be seen in the axial sanding/grinding direction. Clearances of 0.5 mm between the drive shaft and the adapter have been encountered.

Another mounting method is the moulding of a non-ferrous screw thread in the sanding/grinding wheel. This moulded screw thread fits perfectly on the polishing machine. Also, tapping an internal screw thread in the moulded resin core of the sanding/grinding wheel is a possibility. The tapped screw thread fits directly onto a corresponding external screw thread of the polishing machine. For both techniques, the sanding/grinding wheels are manually secured on the polishing machine. Again, the changeover time required for replacing the sanding/grinding wheels is inherently relatively high.

A third known drive technology is based on centrifugal force. Here, an expansion clamping sleeve is mounted in a matching sanding/grinding wheel. This expansion clamping sleeve replaces the adapter. During operation of the polishing machine, the clamping sleeve expands so that the sanding/grinding wheel is blocked and is driven.

A possible embodiment hereof is described in US 2007/0259611.

US2011/0194907 describes a tool clamping mechanism connecting a first member to a second member. WO2012/101622 describes a cutting tool having a cutting head removably secured to a shank by frictional forces maintained between a male coupling member located in a female coupling member. WO2005/016594 describes a motor-driven portable power tool with a mountable disc shaped tool.

However, there remains a need for an efficient system and an efficient method for mounting / dismounting a tool having a cylindrical cavity to / from a drive shaft, for example sanding machines or grinding machines in the metal industry, in particular portable sanding machines or portable grinding machines.

### Summary of the Invention

It is an object of the present invention to provide an adaptor and a mounting system with such an adaptor for efficiently and accurately mounting a tool having a cylindrical cavity on a mounting system.

It is an advantage of embodiments of the present invention that the time required to changeover the tool having a cylindrical cavity is substantially reduced.

In most solutions in the prior art, each time one has to loosen a fixing bolt, dismount the tool with cylindrical-shaped cavity, mount a different type of tool with a cylindrical cavity, and then resecure the fixing bolt in order to change the tool with cylindrical cavity.

It is an advantage of embodiments of the present invention that the tool with cylindrical cavity can be changed without the need for additional auxiliary tools. This reduces the changeover time considerably. A changeover time reduction of 70% can thus be achieved.

It is an advantage of embodiments of the present invention that the mounted tool with cylindrical cavity, when driven by the drive shaft, is less subject to vibrations. The vibration reduction is achieved inter alia by making use of a spring or a compression spring mounted on the drive shaft.

It is an advantage of embodiments of the present invention that the clearance between the adapter and the drive shaft is small or even minimal. This clearance can be smaller than 0.2 mm. As a result, the vibrations on the tool with cylindrical cavity are avoided or are kept to a minimum. As a result, in the case of sanding or grinding, a more beautiful and more uniform sanding or grinding finish is obtained.

It is an advantage of embodiments of the present invention that no projecting object, such as a bolt, is necessary to attach the adapter on the drive shaft. Such protruding object would have a disturbing effect in certain applications and especially when one has to sand/grind in the longitudinal direction along 90° upright sides. This requires full attention of the operator in order not to cause damage to this upright side. When the co-rotating fixing bolt touches the material to be processed, this may lead to damage of this material. Due to the absence of this projecting object, it is possible to sand/grind closer to the upright side.

It is an advantage of embodiments of the present invention that the adapter can be used in a universal way for different tools having a cylindrical cavity. Only a single type or model of adapter is required. This adapter is adjustable. The dimensions of the drive shaft and of the adapter can be adjusted depending on the type of tool with cylindrical cavity that needs to be driven.

The above object is achieved by an apparatus, device and/or method according to the present invention.

The present invention is related to a mounting system for mounting a tool, the mounting system comprising: - a drive shaft, the drive shaft comprising a shaft with at least one key-zone (e.g. in the form of keyway or key-groove or key slot) in the axial direction on the outside of the shaft, and at least one key present in the at least one key-zone, and a collar located at an end of the drive shaft for positioning a spring, - a spring for introducing pressure between the drive shaft and an adapter when the drive shaft is positioned in the adapter, and - an adapter with a seat for accommodating the drive shaft, the seat comprising: at least one keyway adapted to allow sliding of the drive shaft with the key into the adapter, each keyway having a recess for each key-zone (of the drive shaft) for allowing the drive shaft to be rotated relative to the adapter after the drive shaft is slid into the adapter in such a way that the spring is under pressure between the collar of the drive shaft and a surface of the adapter, whereby the recess comprises at least one blocking element - also called shoulder - for blocking the at least one key when the drive shaft is rotated in the keyway, so that, when the drive shaft is mounted in the adapter, the drive shaft can transmit a moment of torsion to the adapter. The blocking element is a shoulder, and the key is pressed to said shoulder of the recess as soon as the shaft of the drive shaft is rotated relative to the adapter during the mounting. The recess comprises second portion where the key pushes against in order to bring about a moment of torsion.

The key can be separate from the shaft, but is mountable in the at least one key-zone. Alternatively, the key may be fixedly mounted on the shaft.

The adapter may have an elongated shape with a substantially polygonal cross section, for example a substantially hexagonal cross section. The inner diameter of the seat may correspond with the outer diameter of the shaft. The inner diameter of the seat may be slightly larger than the outer diameter of the shaft to facilitate easier mounting.

The spring may be a compression spring. It is an advantage of embodiments of the present invention that a compression spring is used, because it only requires about 1/5 (or 20%) of the width compared to conventional wire springs. This makes the invention convenient for the user and has as a result that the width of the drive shaft is substantially the same or even slightly less than the width of keyway drive shafts known today for the same width of the tool.

The tool may comprise abrasive material, e.g. sanding or grinding material. The tool can be, for example, a sanding wheel or a grinding wheel. It is an advantage of embodiments of the present invention that a more beautiful and more uniform sanding or grinding appearance is obtained. It is an advantage of embodiments of the present invention that it allows to sand or grind with a reduced risk of errors.

The outer circumference of a cross section of the adapter may have a substantially polygonal cross-section, with at least three corners, whereby the sides of the polygonal cross-section may be concave and/or wherein the corners may be flattened. The adapter can thus have press faces corresponding to the flattened corners of the cross section, forming flattened edges along the axial direction of the adapter, and concave surfaces corresponding to the concave sides along the axial direction of the adapter. It is an advantage of embodiments of the present invention that various attachment techniques of the adapter in the tool (or machine) are possible. Due to the concave shape of the various surfaces, the attachment surface of the adapter can be increased, for example in the case of glueing. Because of this, the force uptake of the adapter is increased (e.g. much higher) and slippage of the adapter relative to the tool with cylindrical cavity is eliminated. The press faces provide an excellent possibility of pressing the adapter into the hard core of a tool.

The drive shaft may have a drive zone for connecting the drive shaft to a motor system for introducing a rotary motion to the tool during normal operation, after assembly. The drive zone may have a screw thread, e.g. an M14 female, or a 5/8" screw thread, or can be mounted by means of a pin insertion. It is an advantage of embodiments of the present invention that the drive shaft is compatible with existing motor systems. Such motor systems may be hand-held or portable polishing machines and sanding machines and grinding machines.

An upper side and an underside of the adapter may have a complementary shape so that several similar adapters can be mounted contiguously on one another. It is an advantage that various adapters can be mounted contiguously on one another in the tool, whereby the various adapters are mounted such that they have the same shaft, that they touch one another, and that the keyway slots are in line with each other, and wherein the length of the drive shaft is adjusted in accordance with the number of adapters and the corresponding width of the whole.

It is an advantage of embodiments of the present invention that tools with a different width can be mounted by making use of one or more mounting systems or a single mounting system having multiple adapters and a longer drive shaft. The width of an adapter may vary for example between 20 mm and 300 mm, preferably between 30 mm and 100 mm. Several adapters, for example, two, three, four or more adapters may be provided contiguously to one another for emulating a single adapter having a width (in the axial direction) equal to the sum of the individual widths.

An adapter may have a male connector on one side and a female connector on the other side, so that when the male connector of a first adapter is mounted to the female connector of a second adapter, the two adapters nicely connect with each other. It is an advantage of some embodiments of the present invention that the connection between two contiguously mounted adapters is such that, for example, infiltration of for example an adhesive from the exterior to the interior of the adapter is avoided.

In an adapter there may be two (e.g. diametrically) opposing keyways, and in the drive shaft there may be two (e.g. diametrically) opposing key-zones. It is an advantage of embodiments of the present invention that the presence of two diametrically opposing keys per adapter ensures an optimum connection and greatly reduces the risk of vibration.

At the end of the drive shaft, opposite the end of the drive shaft with the collar, a quick-change connection may be provided which allows that a soft material, e.g. a felt, is mounted against the tool after the adapter is mounted on the drive shaft.

It is an advantage of embodiments of the present invention that a soft material, for example felt, can be mounted so that the side of the tool with cylindrical cavity (e.g. sanding/grinding wheel) becomes "non-abrasive". In this way, besides eliminating the co-rotating bolt, also the abrasive effect of the side of the sanding/grinding wheel can be eliminated. In an exemplary embodiment of the present invention, the thickness of this felt is 3 mm.

At the end of the drive shaft opposite the end with the collar, a connection element may be provided for connecting the drive shaft to a tool via a threaded connection. It is an advantage of embodiments of the present invention that known sanding/grinding wheels can now also be connected to the drive shaft. In this way, it is possible to mount keyway wheels available on the market, by means of a bolt and washer. In this way the drive shaft becomes more universal, so that the drive shaft is also suited to mount existing sanding/grinding wheels with a continuous keyway.

The blocking element may be a radius seat in which and end of the key fits, in other words, that has a shape complementary to said end of the key. It is an advantage of embodiments of the present invention that only a very slight force needs to be applied in order to click the key in or out of the radius seat.

The adapter may include a marking that indicates which side of the adapter has to be slid over the drive shaft first (or formulated otherwise, on which side of the adapter the drive shaft is to be inserted), and/or in which direction the adapter has to be rotated relative to the drive shaft to rotate the key up to the recess. It is an advantage of embodiments of the present invention that clear markings indicate how the mounting of the adapter on the drive shaft needs to be performed.

The present invention also relates to an adapter for mounting a tool, the adapter being for use with a drive shaft having at least one key-zone arranged in the axial direction on the outside of the shaft, at least one key in the at least one key-zone, and a collar for positioning a spring, and for use with a spring for introducing a pressure between the drive shaft and the adapter after mounting, the adapter comprising a seat for accommodating the drive shaft, the seat comprising a keyway adapted to allow the drive shaft with at least one key to be inserted (e.g. slid) into the adapter, each keyway having a recess for each key-zone (of the drive shaft) for allowing the drive shaft to be rotated relative to the adapter after the drive shaft is slid into the adapter in such a way that the spring is under pressure between the collar of the drive shaft and a surface of the adapter, the recess comprising a blocking element - also called shoulder - for blocking the key when the drive shaft is rotated in the keyway, so that, when the drive shaft is mounted in the adapter, the drive shaft can transmit a moment of torsion to the adapter. The blocking element is a shoulder, and the key is pressed to said shoulder of the recess as soon as the shaft of the drive shaft is rotated relative to the adapter during the mounting. The recess comprises second portion where the key pushes against in order to bring about a moment of torsion.

The outer contour of a cross section of the adapter may have a polygon-like shape, with at least three corners, the sides of the polygon-like shape being concave and/or the corners being flattened.

A top side and a bottom side of the adapter may have a complementary shape so that several similar adapters can be mounted contiguously to one another.

The adapter may have a male connector on one side and a female connector on the other side, so that, when the male connector of a first adapter is mounted to the female connector of a second adapter, the two adapters are contiguous to each other. The adapter may have two diametrically opposing keyways. The blocking element may be a radius seat in which an end of a key fits.

The adapter may include a marking that indicates which side has to slide over the drive shaft first and/or in which direction the adapter has to be rotated relative to the drive shaft in order to rotate the key up to the recess.

The present invention also relates to a tool, wherein the tool comprises an adapter as described here above. The adapter may be glued and/or pressed in a cavity of the tool, or the adapter may be moulded in a central cavity of the tool. It is an advantage of embodiments of the present invention that by providing a rigid (albeit detachable) connection between the adapter and the tool, the amount of vibration is reduced. In addition, the adapter fits perfectly with the drive shaft, which is not the case for the prior art where different types of tools each have their own adapter, which are not necessarily tuned to the drive shaft as far as their diameter is concerned. For example, because the manufacturer of the drive shaft and the manufacturer of the adapter are different. The fact that the prior art adapter and drive shaft are not perfectly matched to each other causes an imbalance and vibration on the tool with cylindrical cavity (e.g. sanding/grinding wheel). This can, in the case of a sanding/grinding application on stainless steel, lead to a cloud-like appearance on the stainless steel.
This cloud-like appearance can be seen in the axial sanding/grinding direction. Clearances of 0.5 mm between the drive shaft and the adapter have been encountered in the prior art.

The tool of the present invention can consist of a group of smaller tools, each with a mounted or moulded adapter and positioned contiguous to each other, wherein the group of tools is mounted on a drive shaft adapted in length for driving the combination of adapters. It is an advantage of embodiments of the present invention that the tools with cylindrical cavity can be assembled or combined in the width direction to obtain the desired width. For example, if a tool with a cylindrical cavity (e.g. a sanding/grinding wheel) of 150 mm is required, this can be realized by making a combination on a drive shaft of a first wheel of 100 mm and a second wheel of 50 mm.

Furthermore disclosed is a method for mounting a tool having a cylindrical cavity on a shaft of a motor system, the method comprising: - mounting a drive shaft on the axis of the motor system, the drive shaft comprising: a shaft with at least one key-zone arranged in the axial direction on the outside of the shaft, with at least one key mounted in the at least one key-zone, and at an end of the shaft a spring positioned against a collar of the shaft; - sliding the tool having a cylindrical cavity over the drive shaft, whereby an adapter is fitted in the tool, the adapter having a seat comprising at least one keyway so that the drive shaft with mounted key can be slid in the adapter, with in each keyway for each key-zone a recess which allows the drive shaft to be rotated relative to the adapter when the driving shaft is inserted so deep into the adapter that the spring is under pressure, and whereby the recess has a blocking element - for instance a shoulder - behind which the mounted key blocks, after the drive shaft has been rotated; - blocking the shaft of the motor system; - pushing the tool against the spring using a small force so that the spring is pressed in the tool by the adapter; - rotating the tool until the at least one key encounters the recess; - releasing the tool, so that, when the drive shaft is mounted in the adapter, the drive shaft can transmit a moment of torsion to the adapter.

It is an advantage of embodiments of the present invention that the mounting of the tool having a cylindrical cavity on a motor system can be accomplished without additional mechanical aids.

The present invention also relates to a method for dismounting a tool from a shaft of a motor system, the method comprising: - blocking the shaft of the motor system whereupon a drive shaft is mounted, the drive shaft comprising: a shaft with at least one key-zone arranged in the axial direction on the outside of the shaft, with at least one key mounted in the key-zone, and at an end of the shaft a spring positioned against a collar of the shaft; - pushing the tool against the motor system, whereby an adapter is mounted in the tool, the adapter comprising a seat, the seat comprising: at least one keyway so that the drive shaft with mounted key can be pushed in the adapter; within each keyway a recess for each key-zone, which recess allows the drive shaft to be rotated relative to the adapter when the drive shaft is inserted so deep into the adapter that the spring is under pressure, and whereby the recess has a blocking element behind which the mounted key blocks, so that the spring is pressed by the adapter in the tool; - rotating the tool until the key ends up in the keyway; - sliding the tool over the drive shaft.

It is an advantage of embodiments of the present invention that the dismounting of the tool from a motor system can be accomplished without additional mechanical aids.

The method may furthermore comprise securing the adapter in the tool by means of mechanical pressing and/or bonding or by constructing the adapter in the tool, for example by casting.

It is an advantage of embodiments of the present invention that, due to a rigid connection between the adapter and the tool with cylindrical cavity, slip between the two is prevented.

Particular and preferred aspects of the invention are set out in the accompanying independent and dependent claims. The above and other aspects of the invention will be apparent from and elucidated with reference to the embodiment(s) described hereinafter. The scope of the invention is defined by the appended claims.

### Brief description of the figures

FIG 1 shows a 3D exploded view of a drive shaft, an adapter mounted in a tool, and a felt disc, according to an embodiment of the present invention.
FIG 2 shows a front view of an adapter according to an embodiment of the present invention.
FIG 3 shows a 3D view of an adapter, according to an embodiment of the present invention.
FIG 4 shows a 3D view of the adapter of FIG. 3, the recess is easily visible in this figure, in accordance with an embodiment of the present invention.
FIG 5 shows a 3D view of a compression spring, which is a part of the drive shaft, according to an embodiment of the present invention.
FIG 6 shows a cross-sectional view of two contiguous adapters mounted in a tool, and fitted on a single drive shaft, according to an embodiment of the present invention.
FIG 7 illustrates a method for mounting a tool having a substantially cylindrical cavity by means of a mounting system on a shaft of a motor system, according to an embodiment of the present invention.
FIG 8 illustrates a method for dismounting a tool having a substantially cylindrical cavity, mounted by means of a mounting system on a shaft of a motor system, according to an embodiment of the present invention.
FIG 9 illustrates another example of a mounting system according to an embodiment of the present invention.

The drawings are only schematic and are non-limiting. In the drawings, the size of some of the elements may be exaggerated and not drawn on scale for illustrative purposes. Any reference signs in the claims shall not be construed as limiting the scope. In the different drawings, the same reference signs refer to the same or analogous elements.

### Detailed description of illustrative embodiments

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, above, front and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, which is solely defined by the appended claims.

In the description provided here numerous specific details are put forward. However, it is understood that embodiments of the invention may be practiced without these specific details. In other instances, well-known methods, structures and techniques have not been shown in detail in order not to obscure an understanding of this description.

Where in embodiments of the present invention reference is made to "the width" of the drive shaft or "the width" of the adapter, reference is made to the distance between the ends of the drive shaft or adapter, and this in accordance with the axial direction of the drive shaft or adapter. Where in embodiments of the present invention, reference is made to "adapter being shifted over a shaft", this is of course equivalent to "a shaft being inserted or slid in an adapter".

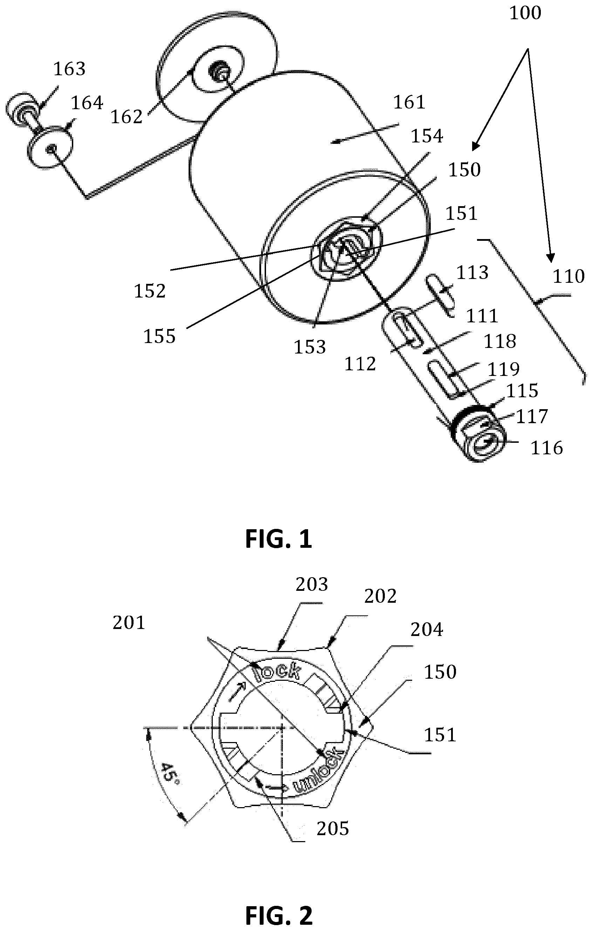

Preferred embodiments of the invention relate to a mounting system 100, an example of which is shown in FIG 1, for the mounting of a tool 161, typically having a cylindrical cavity in which an adapter 150 is provided for driving. This tool 161 can be a sanding wheel or a grinding wheel. Other abrasive wheels, such as polishing wheels, fleece wheels and flap wheels are also possible. Drive Rubbers, inflatable wheels, ventilated wheels, and other non-mentioned abrasive and wheels with polishing materials can also belong to the possibilities. The drive technology can be used for various tools in various industries such as the metal, non-ferrous, plastic, glass and stone industry.

The mounting system 100 comprises a drive shaft 110 that consists of a shaft 111 with at least one key-zone 112, at least one key 113, with at an end of the shaft 110 a collar 114 against which a spring 115 (possibly a compact compression spring) can be placed. The shaft 111 has at least one key-zone 112, but the number of key-zones can be much larger, for example, the key-zones may be arranged in diametrically opposed pairs, whereby multiple pairs, if present, are aligned with each other. For example, the shaft may comprise at least two, or at least four, or at least six, etc. key-zones 112. The keys 113 may be mounted in the key-zones 112. Alternatively, the keys 113 may also be mountable in the key-zones 112, but for example not fixed thereto.

The mounting system 100 also comprises an adapter 150 which comprises a seat 155. The seat 155 forms a cavity for receiving the drive shaft 110. The cavity formed by the seat has at least one inner diameter corresponding to the outer diameter of the shaft 111. A small (e.g. minimal) clearance between the adapter and the drive shaft can allow that the shaft 111 can slide smoothly in the adapter 150 and can be rotated relative thereto (during mounting). The adapter 150 is the carrier and actuator of the tool 161.

For each position of a key-zone 112 on the shaft 111, a keyway 151 is present in a corresponding position on the inside of the adapter 150. The keyway 151 is positioned so that the drive shaft 110 with mounted key 113 can be slid into the adapter 150. Furthermore, the keyway 151 is provided with a recess 152 for each key-zone 112. This recess 152 allows the drive shaft 110 to be rotated (relative to the adapter 150) when the drive shaft 111 is fully inserted into the adapter 150 (i.e. when the spring is compressed). After the shaft 111 has been rotated (relative to the adapter 150), the spring 115 ensures that the drive shaft 110 is firmly (albeit releasably) mounted in the adapter. More specifically, the key 113 is pressed against a first portion 153 of the recess 152 by the pressure induced by the spring 15. According to the invention, the key 113 is pressed against a shoulder 153 of the recess 152 as soon as the shaft 111 is rotated (relative to the adapter 150) during the mounting. In this way, the recessed area 152 in the keyway 151 makes an excellent connection with the key 113 mounted on the drive shaft 110. Thus mounted, the drive shaft 110 can transfer a moment of torsion to the adapter 150. The key 113 pushes against a second portion 205 of the recess 152. The second portion of the recess 152 where the key 113 pushes against in order to bring about a moment of torsion, is called the "key driving zone" 205. Due to the spring tension, the adapter 150 gets a radial and axial fastening that results in less vibrations during rotation of the tool 161 with cylindrical cavity. When sanding or grinding stainless steel (or the like), this results in a better finish. The cloud-like appearance caused by excessive wheel clearance as seen in the prior art, is thus substantially reduced or even eliminated.

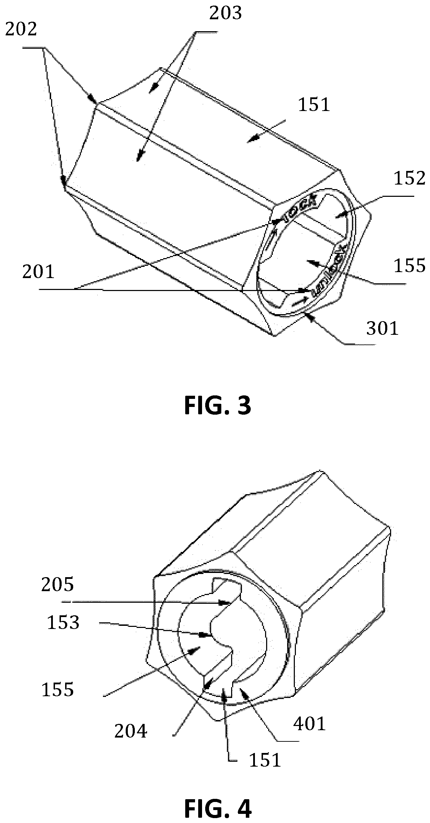

FIG 1 shows a 3D view of the various parts of a mounting system 100 according to an embodiment of the present invention. In FIG 1, the mounting system 100 is shown in a partly mounted state. The mounting system 100 consists of a drive shaft 110 and an adapter 150. The drive shaft 110 comprises a shaft 111. On the shaft 111 at least one key-zone 112, and at an end of the shaft 111 a collar 114 is provided. In a key-zone 112 on the drive shaft 110 at least one key 113 is (fixedly or removably) mounted. (typically one key 113 is provided in each key zone 112). A spring 115 is slid on the shaft 111 until it reaches the collar 114. FIG. 1 also shows the adapter 150, which in this example is inserted in a tool 161. The adapter 150 has a keyway 151 (e.g. a groove) for receiving a key 113, and the keyway 151 has a recess 152 (better shown in FIG. 4). The adapter 150 may be made of plastic, although the invention is not limited thereto.

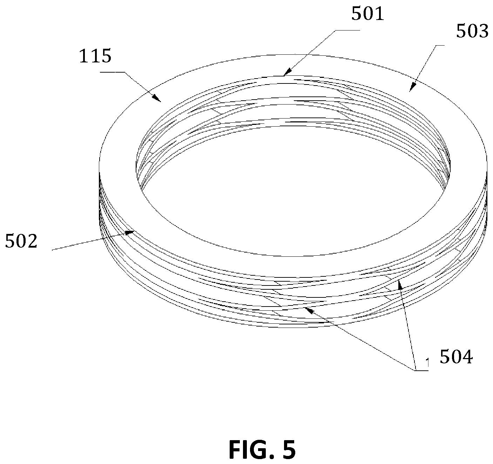

In an embodiment of the present invention, the drive shaft 110 comprises two key-zones (also called: a double key groove 112) and keys 113. In preferred embodiments, the system is provided with a compact compression spring or compression spring as shown in FIG. 5, but other types of springs, e.g. wave springs or piston springs may also be used. In an embodiment of the present invention, the shaft 111 is provided with a drive zone 116 for connection of the drive shaft 110 with a motor system. This drive zone 116 can have various shapes. In the example shown, the drive zone is an M14 female screw thread. Other types of drive zones, such as 5/8" screw thread or a pin take-up, or any other suitable drive zone known by the skilled person are also possible. It is an advantage that the driving zone 116 which provides the connection between a motor system and the tool 161 is located on the shaft 111 (and not on the adaptor 150), so that by providing a different type of shaft 111, the same adaptor and tool assembly (as shown e.g. in FIG. 1) can be used also for devices (e.g. sanding/grinding machines) with a different type of mounting connection (e.g. another size of screw thread, or not screw thread at all).

In an embodiment of the present invention, two parallel flat faces are present on the shaft which lie at a predefined distance from each other. This makes it possible to exert a moment of rotation on the shaft 111 by making use of a wrench.

In embodiments of the present invention, the drive shaft 110 is mounted on portable or hand-held polishing or sanding or grinding machines. These machines contain a spindle blocking mechanism or spindle lock. In most cases, these devices have a drive element with an M14 or 5/8" screw thread. The drive shaft 110 is mounted thereto. Other drive elements like pin insertion and the like are also among the possibilities.

The drive shaft 110 and adapter 150 are designed as an alternative to the currently known sanding/grinding wheels in this target group. Other sizes of adapter and drive shaft are possible, both for rotating and non-rotating tools. It should be noted that the mounting system of the present invention is especially suitable for rotating tools, where it allows a quick mounting or change-over of the tool, as well as an assembly with little or no play.

The attachment of the adapter 150 in the tool 161 (comprising abrasive material), for example having a cylindrical cavity, can be achieved in different ways. In an embodiment of the present invention, this can be accomplished by mechanical pressing. In another embodiment, this can be accomplished by gluing by means of glue or resin. The combination of both pressing and gluing is also possible.

The outer periphery of the cross section of the adapter 150 preferably has a polygon-like shape. This polygon-like shape has at least three corners, but more corners, e.g. four, five, six, eight or more than eight corners are also possible. In the example, six corners are shown. In an example, the sides of the polygon-like shape are concave, and the corners are flattened, but the invention is not limited to such shapes. In a specific embodiment the entire width (i.e. in its axial direction) of the adapter 150 comprises concave surfaces 203 and pressing faces 202. In the rest of the description, this particular outer circumference is referred to as "special star shape." The special star shape makes it possible to use various fastening techniques. For example, the adapter 150 can be mechanically pressed into the (e.g. plastic) inner core of the tool 161. The inner diameter of the inner core - of the diameter of the cylindrical cavity thereby formed - of the tool 161, and the outer diameter of the adapter must be matched to each other. Suitable, e.g. the most suitable press tolerance can be determined e.g. in cooperation with the manufacturer of the tool 161, in accordance with the highest standard and/or best practice of the known techniques used today. Optionally additional bonding can also be applied. When bonding with resin or other adhesive substances the attachment surface of the adapter will be increased due to the special star shape of the adapter 150. Due to this specific shape, the maximum force the adapter can take is (much) increased, and slippage of the adapter relative to the tool with the cylindrical cavity 161 is (strongly) reduced or even eliminated. Such bonding techniques are known today, and should preferably be applied in accordance with the best industry practices.

FIG 2 shows a possible embodiment of the outside of the adapter. The concave surfaces 203 provide a better bonding of the resin by increasing the surface area and ensure that the adapter 150 does not slip relative to the tool 161 with cylindrical cavity. The pressure faces 202 provide a suitable (e.g. perfect) means for pressing the adapter into the core of a tool 161 with cylindrical cavity. The keyway 151 facilitates a swift mounting of the adapter 150 over the drive shaft 110. In the embodiment of the present invention illustrated in FIG 2, the angle of rotation that needs to be made in order to secure the tool with cylindrical cavity 161 on the drive shaft 110, is 45°.

The adapter 150 can be made having an outer diameter corresponding to the inner diameter of the tool to be mounted.

Alternatively, the adapter according to the present invention can also be constructed directly, for example moulded, in the tool. This can be achieved using known production techniques. One example of this is the direct moulding of the adapter 150 in the opening of the tool 161, whereby a flexible element having the shape of the drive shaft 110 to be mounted therein later, is (temporarily) positioned in the opening of the tool 161 during moulding for safeguarding the opening where the actual drive shaft is to be positioned after the step of moulding and removal of the flexible element.

The width of the adapter (in its axial direction) may vary. In one specific example, the width of the adapter (i.e. the size that corresponds to the length of the piece along the axial direction) is approximately 50 mm. Because the adapter can be used in a modular way, the adapter 150 can be extended in the width direction of the tool. This makes it possible to use a single type of adapter 150 to mount tools 161 having different widths. For hand-held or portable machines a manageable width of 200 mm is possible. This width is, however, not limited by the present invention. When multiple adapters 150 are used for mounting a tool, the width of the drive shaft 110 should be adjusted accordingly. For example, in the case of multiple adapters each having a width of 50 mm, the width to be bridged by the drive shaft (that is, the distance from one end of the drive shaft 110 to the compressed spring 115) is 50, 100, 150 or 200 mm in the case of 1, 2, 3 or 4 adapters respectively. Due to the modular nature of the adapter and by providing drive shafts of appropriate length (corresponding to once, twice, 3 times, 4 times, etc. the width of the adapter) tools of different widths can be fitted. Alternatively, individual adapters can be made having the same width as the width of the tool, which may but need not be multiples of 50 mm. In other words, the adapters may alternatively also be provided with such dimensions as required for completely taking up the central opening of conventional tools.

The outer diameter of the tool may vary, and may in a specific example be a value in the range between 100 mm and 130 mm.

In embodiments of the present invention, there are two keys 113 on the drive shaft for each adapter. These keys are located diametrically opposite each other (relative to the virtual axis of the drive shaft) and serve to drive the adapter. In the above example (with multiple adapters), this corresponds to drive shafts 110 comprising two, four, six or eight keys 113, depending on the width of the drive shaft.

In embodiments of the present invention, the tool with cylindrical cavity may be a sanding wheel or a grinding wheel. When a sanding/grinding wheel width of 150 mm is to be achieved, one can make a combination of a sanding/grinding wheel of 100 mm and a sanding/grinding wheel of 50 mm on a drive shaft of 150 mm. In that way the wheels can be assembled (in the width direction) to a desired accumulated width.

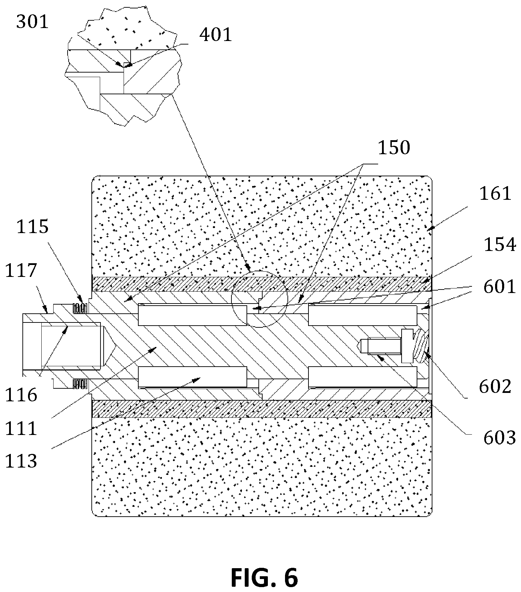

In some embodiments of the present invention, there are two keys 113 (hence also two key slots 112) present on the drive shaft for each adapter 150, at diametrically opposed sides of the drive shaft. When assembled, these keys 113 provide a good connection between the drive shaft 111 and the adapter 150, so that any vibration can be strongly reduced or even completely eliminated. FIG 1 shows an exploded view of a partly assembled drive shaft 110 in an arrangement for a 100 mm sanding/grinding wheel width. This arrangement comprises a solid shaft 111 having a drive zone 116 and a flattened zone 117 to permit the drive shaft to be connected to the spindle of a motor system using e.g. a 19 mm wrench. The motor system can for example be a polishing machine. The spring 115 (optionally a compact compression spring), is in the example of FIG 1 adhered to the collar 114 (spring-stop) of the shaft 111 with an adhesive for metal. In the example of FIG 1, the four keys 113 are glued in the milled key grooves 112 using glue for metal, and provide guidance for mounting the sanding/grinding wheel 161 including adapters 150. FIG 6 shows additionally a worm thread, that acts as a quick-change connection 602 and can be used for the mounting of a felt 162, and a threaded borehole 603 (in the present example, an M5 threaded bore), which can be used for the mounting of existing sanding or grinding wheels on the drive shaft. In the latter case, the sanding or grinding wheel is attached to the adapter 150 by means of a washer and a bolt M5.

In the first case a felt 162 is mounted in order to protect the material (e.g. stainless steel) against sanding or grinding from the abrasive side of the sanding or grinding wheel 161. Especially when sanding/grinding sides arranged perpendicular to each other (i.e. at 90°), this can be a help.

In this way, the mounting system 100 is also compatible with already existing components.

In an embodiment of the present invention, the key 113 is rounded at both ends as shown in FIG 1. This key-radius provides the axial locking of the adapter (after mounting). In other embodiments of the present embodiment, other widths of the drive shafts (e.g. 50 mm, 100 mm, 150 mm) are possible, but the invention is not limited to widths being multiples of 50 mm, and other widths, e.g. about 60 mm, about 70 mm, about 80 mm, about 90 mm, about 110 mm, etc. are also possible. In the example of FIG 1, the sanding or grinding wheel 161 has a width of 100 mm and contains two adapters 150 (only one is visible), each having a width of 50 mm, which adapters are glued in the sanding or grinding wheel. In another embodiment of the present invention, it is possible that these adapters 150 are mechanically pressed into the hard core 154 of the sanding or grinding wheel. The shoulder 153 of the recess 152 of the keyway 151, which is a radius seating in the embodiment shown in FIG 4, has a shape complementary to the shape of the corresponding end of the key 113, so as to form a matching connection with the key-radius. As stated above, the adapters 150 may also be constructed directly in the tool 161, for example, by moulding. It may form a monolithic part with at least the core of the tool, or it may be moulded after the formation of the tool. In the latter case it could be made of a different material than the core of the tool.

Alternatively, adapters with a larger width (e.g. larger than 50 mm) may also be provided, so that a modular system containing multiple contiguous adapters, is not required.

In an embodiment of the present invention a marking 201 present on the adapter 150 indicates which side has to be slid over the drive shaft 110 first, and indicates as well the direction in which the adapter 150 has to be rotated with respect to the drive shaft 110 in order to rotate the keys 113 towards the recess 152 of the keyway 151. One possible embodiment of suitable markings is illustrated in FIG 2. FIG 2 shows a side view of an adapter 150 (perpendicular to the axial direction). Lock and unlock marking 201 are arranged on the adapter 150 to indicate the direction in which the adapter has to be rotated relative to the drive shaft to fasten or connect (lock) the adapter to, respectively, to loosen or disconnect (unlock) the adapter from the drive shaft. The side of the adapter 150 with the markings may be the side of the adapter that has to be slid over the drive shaft first (or stated otherwise, may be the side of the adapter where the drive shaft is to be inserted). Alternatively, as in the embodiment shown in FIG. 2, the markings 201 may be present on the side that is to be slid over the drive shaft 110 last, that is, the non-machine side.

In an embodiment of the present invention, the adapter-side on which the markings 201 are present has a V-connection 301, the other side has an M-connection 401 (see FIG. 6). When multiple adapters are arranged contiguously to each other, the V-connection 301 from one adapter fits perfectly to the M-connection 401 of the other adapter. In FIG 3, the V-connection 301 is clearly visible. Furthermore, the adapter seat 155 is also visible in FIG 3. The seat (in particular the inner diameter thereof) is made as accurately as possible, for positioning the tool with cylindrical cavity 161 as accurately as possible on the drive shaft 110. In the example of FIG 3, the recess 152 in the key-zone 151 extends to one end of the adapter 150. This allows clearance of the key 113, since the width of the recess 152 is wider than the width of the key 113, so that the adapter 150 can be mounted on the drive shaft 110. Due to this clearance zone 601, it is possible to rotate the adapter over an angle of 45° relative to the drive shaft 110 so that the key 113 can be rotated until it reaches the recess 152.

FIG 4 shows the same adapter 150 as shown in FIG 3, but seen from the opposite side. This side is the machine side of the adapter, i.e. the side facing the machine when mounted on the drive shaft. The M-connection 401 is visible on this side. The shoulder 153 against which the key 113 will rest after assembly is a radius seat in this example, as can also be seen in FIG 4. In this way, a suitable (e.g. perfect) one-to-one connection is realized between the key radius (at an end of the key 113) and the radius seat 153, due to the substantially constant pressure of the compact compression spring 115. The side of the recess 152 parallel to the axial direction of the adapter 150 shown in FIG 4, is the drive zone 205 for the adapter, which in turn will drive the tool 161 with cylindrical cavity 161. When this model of adapter is mounted on drive shafts having a continuous key (in contrast to multiple keys shown in FIG. 1), the torque transmission can be accomplished through the drive zones 204 of the keyway 151 (portion where no recess 152 is made). Also in this case the adapter seat 155 carries the adapter 150 on the drive shaft 110.

In an embodiment of the present invention, the spring 115 is a compact compression spring. FIG 5 shows a schematic representation of an example of a compact compression spring, but other compression springs are also possible. The outer diameter 502 of the compression spring fits (e.g. perfectly) on the adapter 150 and provides the necessary axial pressure. The inner diameter 501 slides with a small, e.g. minimum clearance over the outer diameter of the drive shaft 110 until it reaches and rests against the collar 114 which acts as a stop collar for the spring, and a flat zone 503 of the spring 115 may be glued to the collar 114. The number of corrugated strips 504 along with the design (e.g. material, strip thickness, etc.) of the spring 115 provide the necessary compactness and pressure.

FIG 6 shows a sectional view of a mounted tool 161 having a hard core 154 with a cylindrical cavity and with two pressed-in adapters 150, mounted on a complete drive shaft 110 (i.e. a drive shaft including keys 113). A quick-change connection 602, in this case a worm thread, is visible in this drawing. This quick-change connector 602 allows to fit a felt disk 162 (see FIG. 1). Extending inside the quick-change connector opening 602 is a tap M5 603 visible, for optional mounting of wheels with a continuous keyway. These can be fitted with a washer 164 and bolt 163. The two clearance zones 601 for the keys 113 are also visible in FIG 6. In the detailed view (FIG. 6-top), the end of the M- and V-connection 401, 301 can be seen. This can be used for avoiding infiltration of glue during the pouring of glue after insertion of the adapter 150 in the sanding/grinding wheel 161.

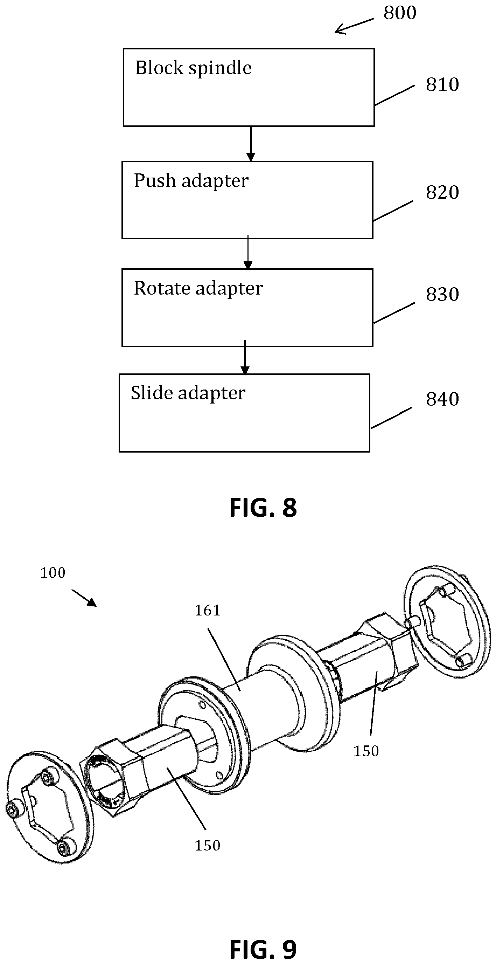

FIG 9 shows, by way of illustration, another example of a mounting system according to an embodiment of the present invention.

Furthermore disclosed is a method for mounting (or assembling or attaching or connecting or fitting) 700 or dismounting (or disassembling or detaching or disconnecting or unfitting) 800 a tool 161, for example a tool with a cylindrical cavity, by means of a mounting system 100 to/from a shaft of a motor system. The motor system may for example be a polishing machine with a spindle blocking mechanism or a spindle lock.

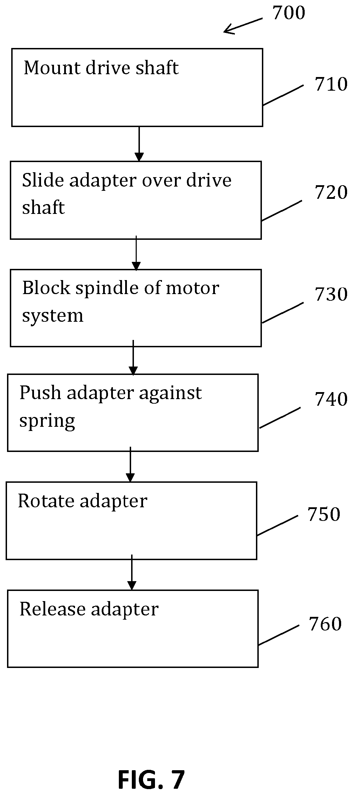

Referring to FIG. 7. When mounting, the drive shaft 110 is mounted, in a first step 710, to the motor system (e.g. the polishing machine). In an exemplary embodiment of the present invention, the connection between the drive shaft 110 and the shaft (or spindle) of the motor system is based on a female M14 screw thread on the drive shaft side and an M14 male screw thread on the motor side. In an exemplary embodiment of the present invention, the drive shaft is secured to the motor system by making use of a wrench of size 19 mm. Other connection systems and connection tools may also be used. Although this step (of securing) is indicated as the first step during assembly, in principle, this step can also be performed afterwards, and the drive shaft may be coupled to the tool before connection to the motor system.

In a next step 720, the tool 161, for example having a cylindrical cavity before assembly, is slid over the drive shaft 110. For this purpose an adapter 150 needs to be present in the tool 161 with the cylindrical cavity. Such an assembly can be performed in several ways, some of which were already described above with reference to the first aspect. The keyways 151 in the adapter 150 must be slid over the keys 113 of the drive shaft 110. In an exemplary embodiment of the present invention, a marking 201 may be present on the adapter 150 to indicate which side of the adapter 150 must be slid first over the drive shaft 110. This marking 201 also indicates the direction in which the adapter 150 has to be rotated with respect to the drive shaft 110 in order to rotate the key 113 towards the recess 152 up to the key driving zone 205. In an embodiment of the present invention, this marking 201 to a lock/unlock marking. In this case one has to take into account that the adapter with the inscription "Lock/Unlock" is not slid on the drive shaft 110 first. When a spindle lock is provided on the motor system, this can be pressed to block the drive shaft (step 730). In a next step 740, one pushes the tool 161 with cylindrical cavity with a light pressure against the spring 115, which may for example be a compact compression spring. The spring 115 is then fully pressed by the adapter 150 into the tool 161 with cylindrical cavity. Without reducing the pressure on the spring 115, one rotates the tool 161 with cylindrical cavity relative to the drive shaft until the key 113 reaches the recess 152 and cannot move further. In an embodiment of the present embodiment, this means rotation over an angle of 45° in the direction indicated by "Lock". In a next step 760, the tool with cylindrical cavity 161, and in the case of a spindle lock also the spindle lock, is/are released. At this (mounted or assembled) stage, the spring 115 pushes the key(s) 113 against the shoulder(s) 153 of the recess(es) 152 in the adapter 150. The shoulder 153 may be a radius seat and may form a 1-to-1 connection between the key 113 (of the drive shaft) and the radius seat 153 (of the adapter 150). In case the tool with cylindrical cavity 161 is a grinding wheel or a sanding wheel, the grinding or sanding operation can now start. The keys 113 push against the drive zone 204 or 205 of the adapter 150 to rotate the grinding or sanding wheel in the right direction, and the compression spring 115 keeps the adapter 150 under constant pressure during the rotation. There is no vibration of the wheel noticeable because of this constant pressure of the spring 115.

Referring to FIG. 8. During dismounting (or disassembly), in a first step 810, the spindle of the motor system is blocked, for example by means of a spindle lock. Subsequently, step 820, the tool 161 with cylindrical cavity is pushed against the spring 115. In a next step 830, the adapter 150 is rotated relative to the drive shaft 110 until the key(s) 113 are positioned in the keyway(s) 151 (e.g. aligned with the entrance of the keyway). In an embodiment of the invention, this means that the tool with the cylindrical cavity needs to be rotated over 45° in the direction indicated by "Unlock". In the case a radius seat 153 is used, only a limited force needs to be exerted by the radius of the keys 113 (present on the drive shaft 110) and the radius seat 153 (present in the adapter 150) against the spring 115 (e.g. compression spring). In this case, one can feel when the tool 161 with the cylindrical cavity clicks out of the radius seat 153. In case of a spindle lock, this lock can now be released, and the tool with the cylindrical cavity can be removed from the drive shaft (step 840), by sliding.

The present invention relates to an adapter 150 for use with a drive shaft 111 for driving a tool 161, e.g. a sanding or grinding tool. The adapter comprises the features as described in claim 1. Optional features as described in the dependent claims. Such an adapter can be formed or shaped in such a way that it can be used in a modular way to obtain an adapter with a larger width (e.g. larger than 50 mm) for driving a tool with a larger width (e.g. larger than 50 mm). The adapter may, for example have a top side and a bottom which are complementary in shape, so that the top side of one adapter matches the bottom side of another adapter.

Furthermore, a drive shaft 111 for use with an adapter 150 for driving a tool 161, e.g. a sanding or grinding tool is disclosed. The drive shaft 111 comprises the features as described for the drive shaft 111 of the mounting system 100 of the first aspect. Optional features as described in the first aspect are also optionally present in the adapter of the third aspect.

Furthermore, a method for producing a tool 161, in particular a grinding tool or a sanding tool, the tool 161 comprising an adapter 150 as described above is disclosed. In the embodiment where the core 154 of the tool is formed integral with the adapter 150, of course to polygonal-like shape and concave surfaces and flattened ribs, and gluing etc. can be omitted, but the internal structures (keyway 151, recess 152, radius seat 153, etc) are still required. The production method may, for example, comprise the direct moulding of an adapter 150 in such a tool (e.g. sanding or grinding tool), whereby an insert, for example having a flexible shape, is provided in the mould for keeping the location where the actual drive shaft is to be positioned later, open. Alternatively, the adapter 150 can also be made separately (i.e. as standalone component), for example by moulding or casting in a mould, and be inserted in a cavity of the tool (using pressure), and may then optionally or preferably, be glued or bonded thereto.

## Claims

1. An adapter (150) for mounting a tool (161), the adapter being for use with a drive shaft (110) comprising at least one key-zone (112) arranged in the axial direction on the outside of the drive shaft, and at least one key (113) present in the at least one key-zone (112), and a collar (114) for positioning a spring (115), and for use with the spring for introducing a pressure between the drive shaft (110) and the adapter (150) after mounting, the adapter (150) comprising:
- a seat (155) for accommodating the drive shaft (110), the seat (155) comprising: at least one keyway (151) configured for allowing insertion of the drive shaft (110) and the at least one key (113) into the adapter (150), each keyway (151) having a recess (152) for each key-zone (112) for allowing rotation of the drive shaft (110) relative to the adapter (150) after the drive shaft (110) is inserted in the adapter (150) in such a way that the spring (115) is under pressure between the collar (114) of the drive shaft (110) and a surface of the adapter (150), the recess (152) comprising at least one blocking element (153) for blocking the at least one key (113) when the drive shaft (110) is rotated in the keyway (151), so that, when the drive shaft (110) is mounted in the adapter (150), the drive shaft (110) can transmit a moment of torsion to the adapter (150), **characterized in that** the blocking element (153) is a shoulder, and that the key (113) is pressed against said shoulder (153) of the recess (152) as soon as a shaft (111) of the drive shaft (110) is rotated relative to the adapter (150) during the mounting, and **in that** the recess (152) comprises a second portion (205) where the key (113) pushes against in order to bring about a moment of torsion.

2. An adapter (150) according to claim 1, wherein the outer circumference of a cross-section of the adapter (150) has a polygon-like shape with at least three corners, wherein the sides (203) of the polygon-like shape are concave, and/or where the corners are flattened and/or wherein the adapter (150) comprises two opposing keyways (151).

3. An adapter (150) according to any of the preceding claims, wherein a top side and a bottom side of the adapter (150) have a complementary shape such that several similar adapters can be mounted contiguously to one another.

4. An adapter (150) according to claim 3, wherein the adapter has a male connector (401) on one side, and a female connector (301) on the other side, so that, when the male connector (401) of a first adapter is positioned against the female connector (301) of a second adapter, the first and the second adapter are closely connected together.

5. An adapter (150) according to any of the preceding claims, wherein the blocking element (153) is a radius seat into which the end of a key (113) fits and/or wherein the adapter comprises a marking (201) that indicates in which side of the adapter the drive shaft (110) is to be inserted, and/or the direction in which the adapter (150) is to be rotated relative to the drive shaft (110) in order to rotate key (113) against the recess (152).

6. A tool (161), wherein the tool comprises an adapter (150) according to any of the preceding claims.

7. A tool (161) according to claim 6, wherein the adapter (150) is glued and/or pressed into a cavity of the tool (161), or wherein the adapter (150) is moulded in a central cavity of the tool (161) and/or wherein the tool consists of a group of smaller tools (161), each with a mounted adapter (150) and being contiguously positioned on each other, whereby the group of tools is mounted on a drive shaft (110) adapted in length to drive the combination of adapters (150).

8. A mounting system (100) for mounting a tool (161), the mounting system (100) comprising:
- an adapter (150) according to any of the preceding claims;
- a drive shaft (110), the drive shaft comprising: a shaft (111) with at least one key-zone (112) arranged in the axial direction on the outside of the shaft (111);
- at least one key (113) present in the at least one key-zone, the drive shaft having a collar (114) located at an end thereof for positioning a spring (115);
- a spring (115) for exerting pressure between the drive shaft (110) and the adapter (150) when the drive shaft is positioned in the adapter (150).

9. A mounting system (100) according to claim 8, wherein the spring (115) is a compression spring.

10. A mounting system (100) according to any of claims 8 or 9, wherein the tool (161) comprises an abrasive material or consists of an abrasive material.

11. A mounting system (100) according to any of claims 8 to 10, wherein the outer circumference of a cross section of the adapter (150) is a polygon-like shape with at least three corners, wherein the sides (203) of the polygon are concave and/or wherein the corners are flattened and/or wherein the drive shaft (110) has a drive zone (116) for mounting the drive shaft to a motor system for introducing rotary motion on the tool after the mounting and/or wherein a top side and a bottom side of the adapter (150) have a complementary shape so that several similar adapters can be mounted contiguously to each other.

12. A mounting system (100) according to any of claims 8 to 11, wherein the adapter (150) has a male connector (401) on one side, and a female connector (301) on the other side, so that, when the male connector (401) of a first adapter is positioned against the female connector (301) of a second adapter, the first and the second adapter are closely connected together wherein the adapter (150) comprises two keyways (151) arranged diametrically opposite each other, and the drive shaft (110) has two key-zones (112) arranged diametrically opposite each other.

13. A mounting system (100) according to any of claims 8 to 12, wherein, at the end of the drive shaft (110) opposite the end with the collar (114), a quick-change connection (602) is provided which allows the mounting of a soft, non-abrasive material (162) against the tool (161) with the cylindrical cavity, after the drive shaft (110) is inserted in the adapter (150) or wherein, at the end of the drive shaft (110) opposite the end with the collar (114), a connection element is provided that is configured for connecting the drive shaft to a tool via a threaded connection.

14. A mounting system (100) according to any of claims 8 to 13, wherein the blocking element (153) is a radius seat for receiving an end of the key (113).

15. A mounting system (100) according to any of claims 8 to 14, wherein the adapter comprises a marking (201) which indicates which side of the adapter (150) should be slid over the drive shaft (110) first when mounting, as well as the direction in which the adapter (150) is to be rotated relative to the drive shaft (110) to move the key (113) against the recess (152).

## Patentansprüche

1. Ein Adapter (150) zum Montieren eines Werkzeugs (161), wobei der Adapter zur Verwendung mit einer Antriebswelle (110) dient, umfassend mindestens eine Keilzone (112), die in der axialen Richtung an der Außenseite der Antriebswelle angeordnet ist, und mindestens einen Keil (113), der in der mindestens einen Keilzone (112) vorhanden ist, und einen Kranz (114) zum Positionieren einer Feder (115) und zur Verwendung mit der Feder zum Einführen eines Drucks zwischen der Antriebswelle (110) und dem Adapter (150) nach Montage, wobei der Adapter (150) umfasst:
- einen Sitz (155) zum Aufnehmen der Antriebswelle (110), wobei der Sitz (155) umfasst: mindestens eine Keilnut (151), die gestaltet ist, Einsetzen der Antriebswelle (110) und des mindestens einen Keils (113) in den Adapter (150) zu erlauben, wobei jede Keilnut (151) eine Vertiefung (152) für jede Keilzone (112) aufweist, um Drehung der Antriebswelle (110) relativ zu dem Adapter (150) zu erlauben, nachdem die Antriebswelle (110) in den Adapter (150) eingesetzt wurde, in derartiger Weise, dass die Feder (115) zwischen dem Kranz (114) der Antriebswelle (110) und einer Oberfläche des Adapters (150) unter Druck ist, wobei die Vertiefung (152) mindestens ein Blockierelement (153) zum Blockieren des mindestens einen Schlüssels (113) umfasst, wenn die Antriebswelle (110) in der Keilnut (151) gedreht wird, sodass, wenn die Antriebswelle (110) in dem Adapter (150) montiert ist, die Antriebswelle (110) ein Verdrehmoment des Adapters (150) übertragen kann,
**dadurch gekennzeichnet, dass** das Blockierelement (153) eine Schulter ist und dass der Keil (113) gegen die Schulter (153) der Vertiefung (152) gepresst wird, sobald eine Welle (111) der Antriebswelle (110) relativ zu dem Adapter (150) während der Montage gedreht wird, und dass die Vertiefung (152) einen zweiten Abschnitt (205) umfasst, gegen den der Keil (113) schiebt, um ein Verdrehmoment hervorzurufen.

2. Ein Adapter (150) nach Anspruch 1, wobei der Außenumfang eines Querschnitts des Adapters (150) eine vieleckige Form mit mindestens drei Ecken aufweist, wobei die Seiten (203) der vieleckigen Form konkav sind und/oder wo die Ecken abgeflacht sind und/oder wobei der Adapter (150) zwei gegenüberliegende Keilnuten (151) umfasst.

3. Ein Adapter (150) nach einem der vorstehenden Ansprüche, wobei eine Oberseite und eine Unterseite des Adapters (150) eine komplementäre Form aufweisen, sodass mehrere ähnliche Adapter fortlaufend aneinander montiert werden können.

4. Ein Adapter (150) nach Anspruch 3, wobei der Adapter einen Steckverbinder (401) an einer Seite und einen Aufnahmeverbinder (301) an der anderen Seite aufweist, sodass, wenn der Steckverbinder (401) eines ersten Adapters gegen den Aufnahmeverbinder (301) eines zweiten Adapters positioniert ist, der erste und der zweite Adapter eng miteinander verbunden sind.

5. Ein Adapter (150) nach einem der vorstehenden Ansprüche, wobei das Blockierelement (153) ein Radiussitz ist, in den das Ende eines Keils (113) passt, und/oder wobei der Adapter eine Markierung (201) umfasst, die anzeigt, in welche Seite der Adapter der Antriebswelle (110) einzusetzen ist, und/oder die Richtung, in die der Adapter (150) relativ zu der Antriebswelle (110) zu drehen ist, um Keil (113) gegen die Vertiefung (152) zu drehen.

6. Ein Werkzeug (161), wobei das Werkzeug einen Adapter (150) nach einem der vorstehenden Ansprüche umfasst.

7. Ein Werkzeug (161) nach Anspruch 6, wobei der Adapter (150) in einen Hohlraum des Werkzeugs (161) geklebt und/oder gepresst ist oder wobei der Adapter (150) in einem zentralen Hohlraum des Werkzeugs (161) geformt ist und/oder wobei das Werkzeug aus einer Gruppe kleinerer Werkzeuge (161), jeweils mit einem montierten Adapter (150) und fortlaufend aneinander positioniert, besteht, wobei die Gruppe von Werkzeugen an einer Antriebswelle (110) montiert ist, deren Länge angepasst ist, um die Kombination von Adaptern (150) anzutreiben.

8. Ein Montagesystem (100) zum Montieren eines Werkzeugs (161), wobei das Montagesystem (100) umfasst:
- einen Adapter (150) nach einem der vorstehenden Ansprüche;
- eine Antriebswelle (110), wobei die Antriebswelle umfasst: eine Welle (111) mit mindestens einer Keilzone (112), die in der axialen Richtung an der Außenseite der Welle (111) angeordnet ist;
- mindestens einen Keil (113), der in der mindestens einen Keilzone vorhanden ist, wobei die Antriebswelle einen Kranz (114) aufweist, der an ihrem Ende zum Positionieren einer Feder (115) angeordnet ist;
- eine Feder (115) zum Ausüben von Druck zwischen der Antriebswelle (110) und dem Adapter (150), wenn die Antriebswelle in dem Adapter (150) positioniert ist.

9. Ein Montagesystem (100) nach Anspruch 8, wobei die Feder (115) eine Druckfeder ist.

10. Ein Montagesystem (100) nach einem der Ansprüche 8 oder 9, wobei das Werkzeug (161) ein Schleifmaterial umfasst oder aus einem Schleifmaterial besteht.

11. Ein Montagesystem (100) nach einem der Ansprüche 8 bis 10, wobei der Außenumfang eines Querschnitts des Adapters (150) eine vieleckige Form mit mindestens drei Ecken ist, wobei die Seiten (203) des Vielecks konkav sind und/oder wobei die Ecken abgeflacht sind und/oder wobei die Antriebswelle (110) eine Antriebszone (116) zum Montieren der Antriebswelle an einem Motorsystem aufweist, um Drehbewegung an dem Werkzeug nach Montage einzuführen, und/oder wobei eine Oberseite und eine Unterseite des Adapters (150) eine komplementäre Form aufweisen, sodass mehrere ähnliche Adapter fortlaufend aneinander montiert werden können

12. Ein Montagesystem (100) nach einem der Ansprüche 8 bis 11, wobei der Adapter (150) einen Steckverbinder (401) an einer Seite und einen Aufnahmeverbinder (301) an der anderen Seite aufweist, sodass, wenn der Steckverbinder (401) eines ersten Adapters gegen den Aufnahmeverbinder (301) eines zweiten Adapters positioniert ist, der erste und der zweite Adapter eng miteinander verbunden sind, wobei der Adapter (150) zwei Keilnuten (151) aufweist, die diametral einander gegenüberliegend angeordnet sind, und die Antriebswelle (110) zwei Keilzonen (112) aufweist, die diametral einander gegenüberliegend angeordnet sind.

13. Ein Montagesystem (100) nach einem der Ansprüche 8 bis 12, wobei an dem Ende der Antriebswelle (110) gegenüber dem Ende mit dem Kranz (114) eine Schnellwechselverbindung (602) bereitgestellt ist, die die Montage eines weichen, nicht schleifenden Materials (162) gegen das Werkzeug (161) mit dem zylindrischen Hohlraum erlaubt, nachdem die Antriebswelle (110) in den Adapter (150) eingesetzt wurde, oder wobei am Ende der Antriebswelle (110) gegenüber dem Ende mit dem Kranz (114) ein Verbindungselement bereitgestellt ist, das zur Verbindung der Antriebswelle mit einem Werkzeug über eine Gewindeverbindung gestaltet ist.

14. Ein Montagesystem (100) nach einem der Ansprüche 8 bis 13, wobei das Blockierelement (153) ein Radiussitz zur Aufnahme eines Endes des Keils (113) ist.

15. Ein Montagesystem (100) nach einem der Ansprüche 8 bis 14, wobei der Adapter eine Markierung (201) umfasst, die anzeigt, welche Seite des Adapters (150) bei Montage als erste über die Antriebswelle (110) gleiten soll, wie auch die Richtung, in die der Adapter (150) relativ zu der Antriebswelle (110) zu drehen ist, um den Keil (113) gegen die Vertiefung (152) zu bewegen.

## Revendications

1. Un adaptateur (150) pour monter un outil (161), l'adaptateur étant destiné à être utilisé avec un arbre d'entraînement (110) comprenant au moins une zone de clavette (112) agencée dans la direction axiale à l'extérieur de l'arbre d'entraînement, et au moins une clavette (113) présente dans la au moins une zone de clavette (112), et un collier (114) pour positionner un ressort (115), et destiné à être utilisé avec le ressort pour introduire une pression entre l'arbre d'entraînement (110) et l'adaptateur (150) après le montage, l'adaptateur (150) comprenant :
- un siège (155) pour recevoir l'arbre d'entraînement (110), le siège (155) comprenant : au moins une rainure de clavette (151) configurée pour permettre l'insertion de l'arbre d'entraînement (110) et de la au moins une clavette (113) dans l'adaptateur (150), chaque rainure de clavette (151) ayant un évidement (152) pour chaque zone de clavette (112) pour permettre la rotation de l'arbre d'entraînement (110) par rapport à l'adaptateur (150) après que l'arbre d'entraînement (110) est inséré dans l'adaptateur (150) de telle manière que le ressort (115) soit sous pression entre le collier (114) de l'arbre d'entraînement (110) et une surface de l'adaptateur (150), l'évidement (152) comprenant au moins un élément de blocage (153) pour bloquer la au moins une clavette (113) lorsque l'arbre d'entraînement (110) est tourné dans la rainure de clavette (151) de telle sorte que, lorsque l'arbre d'entraînement (110) est monté dans l'adaptateur (150), l'arbre d'entraînement (110) puisse transmettre un moment de torsion à l'adaptateur (150),
**caractérisé en ce que** l'élément de blocage (153) est un épaulement et que la clavette (113) est pressée contre ledit épaulement (153) de l'évidement (152) aussitôt qu'un arbre (111) de l'arbre d'entraînement (110) est tourné par rapport à l'adaptateur (150) pendant le montage, et **en ce que** l'évidement (152) comprend une seconde partie (205) contre laquelle la clavette (113) pousse afin de provoquer un moment de torsion.

2. Un adaptateur (150) selon la revendication 1, dans lequel la circonférence externe d'une section transversale de l'adaptateur (150) présente une forme semblable à un polygone ayant au moins trois coins, dans lequel les côtés (203) de la forme semblable à un polygone sont concaves et/ou où les coins sont aplatis et/ou dans lequel l'adaptateur (150) comprend deux rainures de clavette opposées (151).

3. Un adaptateur (150) selon l'une quelconque des revendications précédentes, dans lequel un côté supérieur et un côté inférieur de l'adaptateur (150) présentent une forme complémentaire de telle sorte que plusieurs adaptateurs similaires puissent être montés de manière contigüe les uns aux autres.

4. Un adaptateur (150) selon la revendication 3, dans lequel l'adaptateur présente un connecteur mâle (401) sur un côté et un connecteur femelle (301) sur l'autre côté de telle sorte que, lorsque le connecteur mâle (401) d'un premier adaptateur est positionné contre le connecteur femelle (301) d'un second adaptateur, le premier et le second adaptateur soient étroitement raccordés ensemble.

5. Un adaptateur (150) selon l'une quelconque des revendications précédentes, dans lequel l'élément de blocage (153) est un siège de rayon dans lequel l'extrémité d'une clavette (113) tient et/ou dans lequel l'adaptateur comprend un marquage (201) qui indique dans quel côté de l'adaptateur l'arbre d'entraînement (110) doit être inséré, et/ou la direction dans laquelle l'adaptateur (150) doit être mis en rotation par rapport à l'arbre d'entraînement (110) afin de faire tourner la clavette (113) contre l'évidement (152).

6. Un outil (161), dans lequel l'outil comprend un adaptateur (150) selon l'une quelconque des revendications précédentes.

7. Un outil (161) selon la revendication 6, dans lequel l'adaptateur (150) est collé et/ou pressé dans une cavité de l'outil (161) ou dans lequel l'adaptateur (150) est moulé dans une cavité centrale de l'outil (161) et/ou dans lequel l'outil se compose d'un groupe d'outils plus petits (161), chacun ayant un adaptateur monté (150) et étant positionnés de manière contigüe les uns sur les autres, grâce à quoi le groupe d'outils est monté sur un arbre d'entraînement (110) adapté en longueur pour entraîner la combinaison d'adaptateurs (150).

8. Un système de montage (100) pour monter un outil (161), le système de montage (100) comprenant :
- un adaptateur (150) selon l'une quelconque des revendications précédentes ;
- un arbre d'entraînement (110), l'arbre d'entraînement comprenant : un arbre (111) ayant une zone de clavette (112) agencée dans la direction axiale à l'extérieur de l'arbre (111) ;
- au moins une clavette (113) présente dans la au moins une zone de clavette, l'arbre d'entraînement ayant un collier (114) situé au niveau d'une extrémité de celui-ci pour positionner un ressort (115) ;
- un ressort (115) pour exercer une pression entre l'arbre d'entraînement (110) et l'adaptateur (150) lorsque l'arbre d'entraînement est positionné dans l'adaptateur (150).

9. Un système de montage (100) selon la revendication 8, dans lequel le ressort (115) est un ressort de compression.

10. Un système de montage (100) selon l'une quelconque des revendications 8 ou 9, dans lequel l'outil (161) comprend un matériau abrasif ou se compose d'un matériau abrasif.

11. Un système de montage (100) selon l'une quelconque des revendications 8 à 10, dans lequel la circonférence externe d'une section transversale de l'adaptateur (150) présente une forme semblable à un polygone ayant au moins trois coins, dans lequel les côtés (203) du polygone sont concaves et/ou dans lequel les coins sont aplatis et/ou dans lequel l'arbre d'entraînement (110) présente une zone d'entraînement (116) pour monter l'arbre d'entraînement à un système de moteur pour introduire un mouvement rotatif sur l'outil après le montage et/ou dans lequel un côté supérieur et un côté inférieur de l'adaptateur (150) présentent une forme complémentaire de telle sorte que plusieurs adaptateurs similaires puissent être montés de manière contigüe les uns aux autres.

12. Un système de montage (100) selon l'une quelconque des revendications 8 à 11, dans lequel l'adaptateur (150) présente un connecteur mâle (401) sur un côté et un connecteur femelle (301) sur l'autre côté de telle sorte que, lorsque le connecteur mâle (401) d'un premier adaptateur est positionné contre le connecteur femelle (301) d'un second adaptateur, le premier et le second adaptateur soient étroitement raccordés ensemble, dans lequel l'adaptateur (150) comprend deux rainures de clavette (151) agencées diamétralement opposées l'une à l'autre et l'arbre d'entraînement (110) présente deux zones de clavette (112) agencées diamétralement opposées l'une à l'autre.

13. Un système de montage (100) selon l'une quelconque des revendications 8 à 12, dans lequel, au niveau de l'extrémité de l'arbre d'entraînement (110) opposée à l'extrémité avec le collier (114), une connexion à changement rapide (602) est disposée, laquelle permet le montage d'un matériau souple, non abrasif (162) contre l'outil (161) avec la cavité cylindrique après que l'arbre d'entraînement (110) est inséré dans l'adaptateur (150) ou dans lequel, au niveau de l'extrémité de l'arbre d'entraînement (110) opposée à l'extrémité avec le collier (114), un élément de connexion est disposé, qui est configuré pour raccorder l'arbre d'entraînement à un outil par le biais d'une connexion filetée.

14. Un système de montage (100) selon l'une quelconque des revendications 8 à 13, dans lequel l'élément de blocage (153) est un siège de rayon pour recevoir une extrémité de la clavette (113).

15. Un système de montage (100) selon l'une quelconque des revendications 8 à 14, dans lequel l'adaptateur comprend un marquage (201) qui indique quel côté de l'adaptateur (150) doit d'abord être glissé sur l'arbre d'entraînement (110) lors du montage, ainsi que la direction dans laquelle l'adaptateur (150) doit être mis en rotation par rapport à l'arbre d'entraînement (110) pour déplacer la clavette (113) contre l'évidement (152).
